# EUROPÄISCHE PATENTSCHRIFT

(11) **EP 2 443 363 B1**
(45) Veröffentlichungstag und Bekanntmachung des Hinweises auf die Patenterteilung: **05.03.2014**
(21) Anmeldenummer: 10719364.1
(22) Anmeldetag: 18.05.2010
(51) Int. Cl.: F16F 9/38, F16F 9/58

(54) **KOLBEN-ZYLINDER-AGGREGAT**
PISTON-CYLINDER UNIT
ENSEMBLE PISTON-CYLINDRE

(30) Priorität: 17.06.2009 DE 102009025142
(43) Veröffentlichungstag der Anmeldung: 25.04.2012
(73) Patentinhaber: ZF Friedrichshafen AG, 88038 Friedrichshafen (DE); Volkswagen Aktiengesellschaft, 38440 Wolfsburg (DE)
(72) Erfinder: WERNER, Steffen, 58339 Breckerfeld (DE); RÖHRIG, Axel, 51570 Windeck (DE)
(86) Internationale Anmeldenummer: PCT/EP2010/056788
(87) Internationale Veröffentlichungsnummer: WO 2010/145900

(56) Entgegenhaltungen:
- DE-A1- 3 538 150
- DE-A1- 10 122 796
- DE-A1-102005 031 012
- DE-U1- 8 605 258
- DE-U1- 9 109 020
- US-B1- 6 199 844

## Beschreibung

Die Erfindung bezieht sich auf ein Kolben-Zylinder-Aggregat, bestehend aus einem dämpfungsmittelgefüllten Zylinderrohr, in dem ein an einer Kolbenstange befestigter Kolben axial verschieblich angeordnet ist und das Zylinderrohr in zwei Arbeitsräume unterteilt, eine der Führung der Kolbenstange dienende Kolbenstangendichtungs-Führungseinheit sowie einer Zusatzfedereinrichtung, die ab einem definierten Einfahrweg der Kolbenstange mit einem ebenen Bereich der Zylinderrohrendkappe zur Anlage kommt, wobei die Zylinderrohrendkappe mit einem hülsenförmigen Trägerabschnitt am Zylinderrohr fixiert ist.

Es sind bereits Schwingungsdämpfer bekannt (z.B. DE 86 05 258 U1; DE 41 39 131 A1; DE 91 09 020.2 U1), bei denen in einem Zylinderrohr ein Kolben den Arbeitszylinder in zwei Arbeitsräume unterteilt, und wobei der Kolben an einer Kolbenstange angeordnet und gegenüber der Atmosphäre durch eine Kolben-stangendichtungs-Führungseinheit nach außen geführt wird. Des Weiteren ist dieser Schwingungsdämpfer mit einer Zusatzfedereinrichtung versehen, die ab einem definierten Einfahrweg mit der ebenen Fläche einer Zylinderrohrendkappe zur Anlage kommt. Bei den Zylinderrohrendkappen besteht das Problem darin, dass das über die Kolbenstange vom Arbeitsraum in Richtung der Atmosphäre ausgeschleppte Dämpfungsmittel vorbei an dem hülsenförmigen Trägerabschnitt der Zylinderrohrendkappe und anschließend am Kolben-Zylinder-Aggregat bzw. am Zylinderrohr herunterläuft.

Hiervon ausgehend ist es Aufgabe der Erfindung, ein Kolben-Zylinder-Aggregat derart weiterzubilden, dass die Zylinderrohrendkappe das über die Kolbenstange ausgeschleppte Dämpfungsmittel sammelt und ein Herunterlaufen des Dämpfungsmittels am Kolben-Zylinder-Aggregat vermindert bzw. sogar verhindert.

Erfindungsgemäß wird die Aufgabe durch die Merkmale des Patentanspruchs 1 gelöst.

Nach einem weiteren wesentlichen Merkmal ist vorgesehen, dass mehrere Ausnehmungen vorgesehen sind. Hierbei ist von Vorteil, dass die Ausnehmungen gleichmäßig über dem Innenumfang der Zylinderrohrendkappe verteilt angeordnet sind oder dass die Ausnehmungen von der Unterseite des ebenen Bereichs bis in die Innenwandung des hülsenförmigen Trägerabschnitts verlaufen.

Hierbei ist von Vorteil, dass durch eine Vielzahl von Ausnehmungen ein entsprechend großes Reservoir für die Ansammlung von Dämpfungsmittel, welches über die Kolbenstange aus dem Arbeitsraum heraus gelangt, aufgenommen werden kann.

Nach einem weiteren wesentlichen Merkmal ist vorgesehen, dass die Zylinderrohrendkappe in ihrem Endbereich mit mindestens einer Entlüftungsbohrung versehen ist. Vorteilhaft ist hierbei, dass bei Anschlagen der Zusatzfedereinrichtung auf dem ebenen Bereich der Zylinderrohrendkappe die Luft innerhalb der Zylinderrohrendkappe nicht komprimiert und in den Arbeitsraum gepresst werden kann, sondern dass diese Luft durch die entsprechenden Entlüftungsbohrungen wieder in die Atmosphäre entweichen kann.

Vorteilhaft ist, dass das Volumen des gesammelten Dämpfungsmittels innerhalb der Zylinderrohrendkappe vergrößert werden kann bevor es aus den Entlüftungsbohrungen als Ölnebel austreten kann. Aufgrund der Abdichtung der Zylinderrohrendkappe über ihren hülsenförmigen Trägerabschnitt gegenüber dem Kolben-Zylinder-Aggregat ist gewährleistet, dass lediglich Ölnebel über die Entlüftungsbohrungen entweichen kann.

Zur Gewährleistung der geforderten Einbaulage der Entlüftungsbohrungen ist nach einem weiteren Merkmal vorgesehen, dass die Zylinderrohrendkappe eine Markierung zur lageorientierten Montage aufweist. Vorteilhaft ist hierbei, dass als Markierung eine Öffnung vorgesehen ist.

Bevorzugte Ausführungsbeispiele der Erfindung sind in den Zeichnungen schematisch dargestellt.

Es zeigt:
Figur 1 ein Kolben-Zylinder-Aggregat im Schnitt
Figur 2 einen Ausschnitt durch die Kolbenstangendichtungs-Führungseinheit als Einzelheit
Figuren 3 und 4 eine Zylinderrohrendkappe in zwei verschiedenen Ansichten.

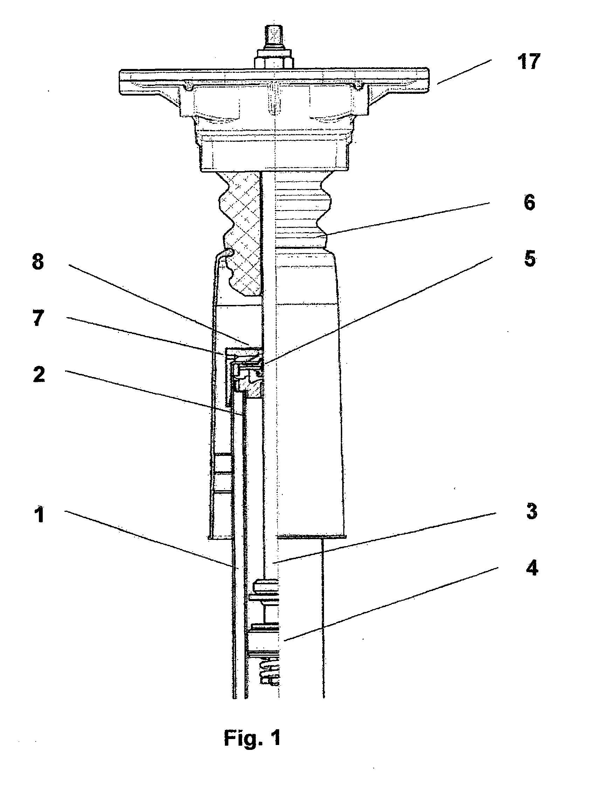

Die Figur 1 zeigt ein Kolben-Zylinder-Aggregat 1 in Form eines Schwingungsdämpfers, der einerseits über eine Kolbenstange 3 mit einer nicht dargestellten Fahrzeugkarosserie und andererseits mit einer nicht dargestellten Achskonstruktion verbunden ist, wobei sich die jeweiligen Anlenkpunkte relativ zueinander bewegen können. Ein konzentrisch zur Kolbenstange 3 montierter elastischer Puffer steht in Ruhelage zur Fahrzeugkarosserie und dient als Zusatzfedereinrichtung 6 im letzten Kennlinienbereich der separat angeordneten Fahrzeugtragfeder.

Das dämpfungsmittelgefüllte Zylinderrohr 2 wird durch einen Kolben 4 in zwei Arbeitsräume unterteilt, wobei der obere Arbeitsraum von der Kolbenstangendichtungs-Führungseinheit 5 verschlossen wird. Das Zylinderrohr 2 wird von einer Zylinderrohrendkappe 7 ummantelt. Des Weiteren besitzt die Zylinderrohrendkappe 7 einen ebenen Bereich 8, der als Anschlagfläche für die Zusatzfedereinrichtung 6 dient. In dem Moment, wo die Zusatzfedereinrichtung 6 auf dem ebenen Bereich 8 der Zylinderrohrendkappe 7 zur Anlage kommt, wird die im inneren Endbereich 11 der Zylinderrohrendkappe 7 komprimierte Luft über die Entlüftungsbohrungen 12 zur Atmosphäre zurückgeführt.

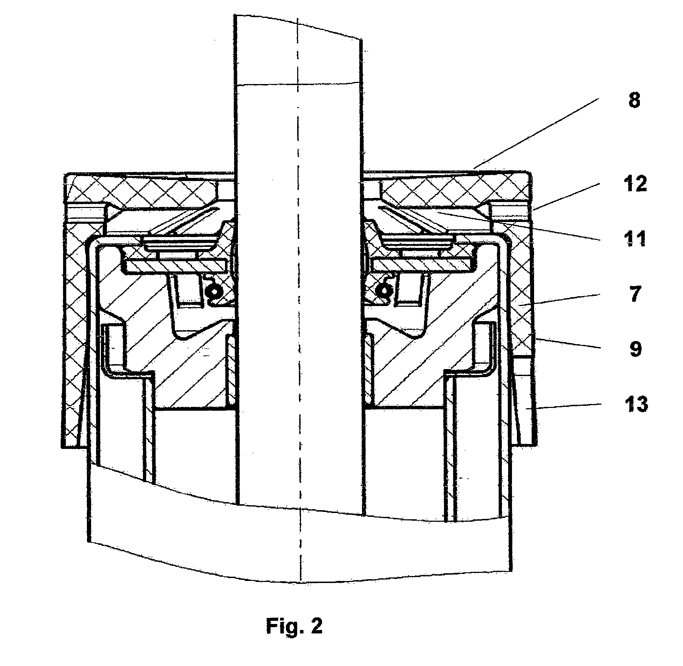

Aus der Figur 2 ist als Einzelheit eine Zylinderrohrendkappe 7 zu entnehmen, wobei im inneren Endbereich 11 außer den Entlüftungsbohrungen 12 auch die Ausnehmungen 10 zur Aufnahme des Dämpfungsmittels angeordnet sind. Der hülsenförmige Trägerabschnitt 9 der Zylinderrohrendkappe 7 ist zur Befestigung auf dem Kolben-Zylinder-Aggregat 1 bzw. dem Zylinderrohr 2 vorgesehen. Um bei schräg eingebautem Kolben-Zylinder-Aggregat 1 im Fahrzeug die Entlüftungsbohrungen 12 an der vorgegebenen Stelle zu installieren ist eine Markierung 13 in Form einer Öffnung 13a vorgesehen, die eine maschinelle Montage der Zylinderrohrendkappe 7 gewährleistet.

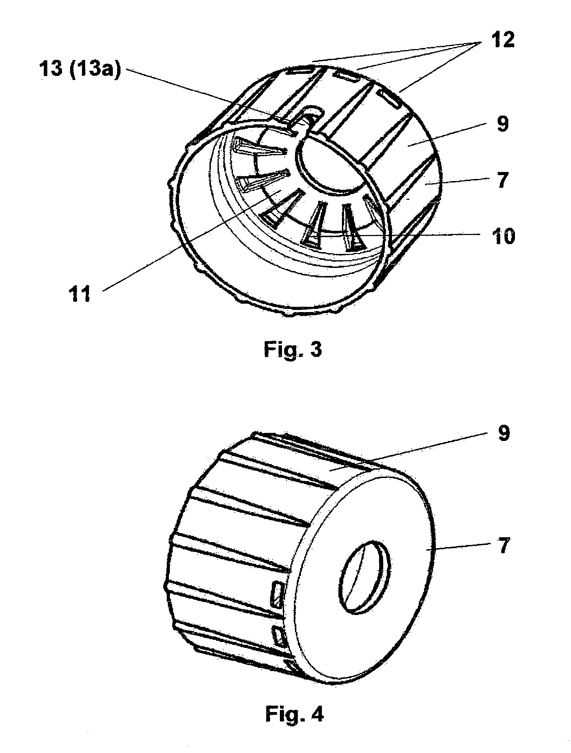

Die Figuren 3 und 4 zeigen die Zylinderrohrendkappe 7 als Einzelteil in zwei verschiedenen Ansichten, wobei sich an den ebenen Bereich 8 der hülsenförmige Trägerabschnitt 9 anschließt, und dass im inneren Endbereich 11 eine Vielzahl von Ausnehmungen 10 zur Aufnahme des Dämpfungsmittels angeordnet sind. Die Entlüftungsbohrungen 12 befinden sich im Übergangsbereich vom ebenen Bereich 8 zum hülsenförmigen Trägerabschnitt 9.

Aus der Figur 2 ist zusätzlich noch zu entnehmen, dass der ebene Bereich 8 gegebenenfalls ein Gefälle in Richtung der Kolbenstange 3 aufweisen kann, so dass auch von diesem Bereich eventuell ausgeschlepptes Dämpfungsmittel in Richtung der Kolbenstange 3 fließen kann und damit zurück in den Innenbereich 11 der Zylinderrohrendkappe 7.

### Bezugszeichenliste

1 - Kolben-Zylinder-Aggregat
2 - Zylinderrohr
3 - Kolbenstange
4 - Kolben
5 - Kolbenstangendichtungs-Führungseinheit
6 - Zusatzfedereinrichtung
7 - Zylinderrohrendkappe
8 - ebener Bereich
9 - hülsenförmiger Trägerabschnitt
10 - Ausnehmung
11 - innerer Endbereich
12 - Entlüftungsbohrung
13 - Markierung
17 - Stützlager

## Patentansprüche

1. Kolben-Zylinder-Aggregat, bestehend aus einem dämpfungsmittelgefülltem Zylinderrohr, in dem ein an einer Kolbenstange befestigter Kolben axial verschieblich angeordnet ist und das Zylinderrohr in zwei Arbeitsräume unterteilt, eine der Führung der Kolbenstange dienende Kolbenstangendichtungs-Führungseinheit sowie einer Zusatzfedereinrichtung, die ab einem definierten Einfahrweg der Kolbenstange mit einem ebenen Bereich der Zylinderrohrendkappe zur Anlage kommt, wobei die Zylinderrohrendkappe mit einem hülsenförmigen Trägerabschnitt am Zylinderrohr fixiert ist, **dadurch gekennzeichnet, dass** die Zylinderrohrendkappe (7) in ihrem inneren Endbereich (11) mit mindestens einer Ausnehmung (10) zur Aufnahme von Dämpfungsmittel versehen ist und der hülsenförmige Trägerabschnitt (9) abdichtend am Zylinderrohr (2) anliegt

2. Kolben-Zylinder-Aggregat nach Anspruch 1,**dadurch gekennzeichnet, dass** mehrere Ausnehmungen (10) vorgesehen sind.

3. Kolben-Zylinder-Aggregat nach Anspruch 2, **dadurch gekennzeichnet, dass** die Ausnehmungen (10) gleichmäßig über dem Innenumfang der Zylinderrohrendkappe (7) verteilt angeordnet sind.

4. Kolben-Zylinder-Aggregat nach Anspruch 2, **dadurch gekennzeichnet, dass** die Ausnehmungen (10) von der Unterseite des ebenen Bereichs (8) bis in die Innenwandung des hülsenförmigen Trägerabschnitts (9) verlaufen.

5. Kolben-Zylinder-Aggregat nach Anspruch 1, **dadurch gekennzeichnet, dass** die Zylinderrohrendkappe (7) in ihrem Endbereich mit mindestens einer Entlüftungsbohrung (12) versehen ist.

6. Kolben-Zylinder-Aggregat nach Anspruch 1, **dadurch gekennzeichnet, dass** die Zylinderrohrendkappe eine Markierung (13) zur lageorientierten Montage aufweist.

7. Kolben-Zylinder-Aggregat nach Anspruch 6, **dadurch gekennzeichnet, dass** als Markierung (13) eine Öffnung (13a) vorgesehen ist.

8. Kolben-Zylinder-Aggregat nach Anspruch 1, **dadurch gekennzeichnet, dass** der ebene Bereich (8) der Zylinderrohrendkappe (7) mit Gefälle in Richtung der Kolbenstange (3) verläuft.

## Claims

1. Piston-cylinder unit, consisting of a cylinder tube filled with damping medium, in which a piston fastened to a piston rod is arranged axially displaceably and subdivides the cylinder tube into two working spaces, of a piston-rod seal guide unit which serves for guiding the piston rod and of an additional spring device which comes into bearing contact with a planar region of the cylinder-tube end cap beyond a defined retraction travel of the piston rod, the cylinder-tube end cap being fixed to the cylinder tube by means of a sleeve-shaped carrier portion, **characterized in that** the cylinder-tube end cap (7) is provided in its inner end region (11) with at least one recess (10) for the reception of damping medium, and the sleeve-shaped carrier portion (9) bears sealingly against the cylinder tube (2).

2. Piston-cylinder unit according to Claim 1, **characterized in that** a plurality of recesses (10) are provided.

3. Piston-cylinder unit according to Claim 2, **characterized in that** the recesses (10) are arranged so as to be distributed uniformly over the inner circumference of the cylinder-tube end cap (7).

4. Piston-cylinder unit according to Claim 2, **characterized in that** the recesses (10) run from the underside of the planar region (8) into the inner wall of the sleeve-shaped carrier portion (9).

5. Piston-cylinder unit according to Claim 1, **characterized in that** the cylinder-tube end cap (7) is provided in its end region with at least one vent bore (12).

6. Piston-cylinder unit according to Claim 1, **characterized in that** the cylinder-tube end cap has a marking (13) for position-oriented mounting.

7. Piston-cylinder unit according to Claim 6, **characterized in that** an orifice (13a) is provided as the marking (13).

8. Piston-cylinder unit according to Claim 1, **characterized in that** the planar region (8) of the cylinder-tube end cap (7) runs at an inclination in the direction of the piston rod (3).

## Revendications

1. Ensemble piston-cylindre, constitué d'un tube cylindrique rempli de fluide d'amortissement, dans lequel tube cylindrique est disposé de manière axialement mobile un piston fixé à une tige de piston qui divise le tube cylindrique en deux espaces de travail, une unité de guidage et d'étanchéité de tige de piston servant au guidage de la tige de piston ainsi qu'un dispositif de ressort supplémentaire qui, à partir d'une distance de rentrée définie de la tige de piston, vient s'appuyer contre une région plane du capuchon d'extrémité de tube cylindrique, le capuchon d'extrémité de tube cylindrique étant fixé au tube cylindrique par une portion de support en forme de douille, **caractérisé en ce que** le capuchon d'extrémité de tube cylindrique (7) est pourvu, dans sa région d'extrémité intérieure (11), d'au moins un évidement (10) pour recevoir un fluide d'amortissement et la portion de support en forme de douille (9) s'applique de manière étanche contre le tube cylindrique (2).

2. Ensemble piston-cylindre selon la revendication 1, **caractérisé en ce que** plusieurs évidements (10) sont prévus.

3. Ensemble piston-cylindre selon la revendication 2, **caractérisé en ce que** les évidements (10) sont disposés de manière répartie uniformément sur la périphérie intérieure du capuchon d'extrémité de tube cylindrique (7).

4. Ensemble piston-cylindre selon la revendication 2, **caractérisé en ce que** les évidements (10) s'étendent à partir du côté inférieur de la région plane (8) jusque dans la paroi intérieure de la portion de support en forme de douille (9).

5. Ensemble piston-cylindre selon la revendication 1, **caractérisé en ce que** le capuchon d'extrémité de tube cylindrique (7) est pourvu, dans sa région d'extrémité, d'au moins un alésage de ventilation (12).

6. Ensemble piston-cylindre selon la revendication 1, **caractérisé en ce que** le capuchon d'extrémité de tube cylindrique présente un marquage (13) pour le montage orienté en position.

7. Ensemble piston-cylindre selon la revendication 6, **caractérisé en ce qu'**une ouverture (13a) est prévue en tant que marquage (13).

8. Ensemble piston-cylindre selon la revendication 1, **caractérisé en ce que** la région plane (8) du capuchon d'extrémité de tube cylindrique (7) s'étend avec une pente en direction de la tige de piston (3).
